# EUROPÄISCHE PATENTSCHRIFT

(11) **EP 3 813 607 B1**
(45) Veröffentlichungstag und Bekanntmachung des Hinweises auf die Patenterteilung: **30.08.2023**
(21) Anmeldenummer: 19736320.3
(22) Anmeldetag: 25.06.2019
(51) Int. Cl.: A47J 31/46

(54) **KAFFEE-AUTOMAT MIT EINER VORRICHTUNG ZUR ENTFERNUNG VON KAFFEESCHAUM AUS KAFFEEFLÜSSIGKEIT**
COFFEE MACHINE WITH APPARATUS FOR REMOVING COFFEE FOAM FROM COFFEE LIQUID
MACHINE À CAFÉ AVEC UN DISPOSITIF PERMETTANT D'ENLEVER DE LA MOUSSE D'UN CAFÉ LIQUIDE

(30) Priorität: 26.06.2018 DE 102018005029
(43) Veröffentlichungstag der Anmeldung: 05.05.2021
(73) Patentinhaber: Spengler GmbH & Co. KG, 76646 Bruchsal (DE)
(72) Erfinder: HEUBERGER, Ralf, 76857 Albersweiler (DE)
(74) Vertreter: Kesselhut, Wolf
(86) Internationale Anmeldenummer: PCT/EP2019/066756
(87) Internationale Veröffentlichungsnummer: WO 2020/002288

(56) Entgegenhaltungen:
- EP-A1- 3 298 934
- US-B1- 6 397 907

## Beschreibung

Die Erfindung betrifft einen Kaffee-Automaten mit einer Vorrichtung zum Entfernen von Kaffeeschaum aus Kaffeeflüssigkeit gemäß dem Oberbegriff von Anspruch 1.

Für die meisten Kaffeetrinker ist eine der wichtigsten Eigenschaften von Espresso die als Crema bezeichnete dichte Schaumschicht, welche das Getränk überragt, nach dem dieses in eine Tasse eingelassen wurde. Crema steht italienisch für Sahne und ist der natürliche Schaumkopf, der sich auf dem Kaffee nach dem Einfüllen bildet - ähnlich wie der Schaum auf einem Glas Bier.

Der Grund für die Entstehung von Crema - die in der vorliegenden Patentanmeldung allgemein auch als Kaffeeschaum bezeichnet wird, liegt darin, dass das für den Brühvorgang zugeführte Wasser unter sehr hohem Druck steht. Dadurch kann es mehr von dem beim Rösten des Kaffees erzeugten Kohlendioxyd lösen als bei Atmosphärendruck. Wenn die Kaffeeflüssigkeit nach dem Brühvorgang auf dem Weg in die Tasse wieder dem normalen Atmosphärendruck ausgesetzt ist, kann die Flüssigkeit das in ihr enthaltene Kohlendioxyd nicht mehr halten, wodurch dieses in Form von unzähligen kleinen Blasen aus der Flüssigkeit austritt. Diese Blasen werden in der Kaffeeflüssigkeit eingeschlossen und wirken wie ein stabiler Schaum.

Lange Zeit galt Crema als wichtig, aber in Wirklichkeit können aus ihrem Vorhandensein lediglich zwei Aussagen abgeleitet werden: Erstens, ob das eingesetzte Kaffeepulver frisch ist, da dieses umso weniger Kohlendioxid enthält, je länger es her ist, dass die hierzu eingesetzten Kaffeebohnen geröstet wurden, und zweitens, ob der gebrühte Kaffee, insbesondere Espresso, stark oder schwach ist. Je dunkler der Schaum, desto stärker ist der Kaffee, da die Crema lediglich aus Kaffeeflüssigkeitsblasen besteht, in denen Kohlendioxid enthalten ist, und die das Licht entsprechend reflektieren. Je dunkler die Kaffeeflüssigkeit ist, umso dunkler ist auch die Crema, was den Grund dafür darstellt, dass dunkel gerösteter Kaffee dunkle Crema erzeugt. Allerdings sagt die Farbe der Crema nichts über die Qualität der eingesetzten Kaffeebohnen aus.

Auch wenn die Crema in vielen südländischen Kulturkreisen, wie z.B. in Italien, als ein wesentliches Qualitätsmerkmal von Kaffeegetränken, insbesondere von Espresso, angesehen wird, so ist deren Vorhandensein beispielsweise in den skandinavischen Kulturkreisen nicht gewünscht und wird beim Genuss von Kaffeegetränken eher als störend angesehen.

Bei der automatisierten Herstellung von Kaffeegetränken in Kaffeeautomaten stellt es hierbei ein besonderes Problem dar, dass das gewünschte Kaffeegetränk innerhalb möglichst kurzer Zeit aus frisch gemahlenen Kaffeebohnen in der Brüheinheit gebrüht und über den Kaffee-Auslass aus dem Verkaufsautomaten ausgegeben werden soll, sodass an sich keine Zeit mehr besteht, die unerwünschte Crema, d.h. den Kaffeeschaum, von der Kaffeeflüssigkeit zu trennen. Dies stellt den Grund dafür dar, dass sich, insbesondere bei Espresso, der unter hohem Druck gebrüht wird, in der Regel stets eine dichte Crema-Schaumkrone auf der ausgegebenen Kaffeeflüssigkeit befindet, die nach dem Abkühlen zu unschönen Ablagerungen, bzw. Rändern aus geplatzten und eingetrockneten Kaffeeschaumblasen an den Innenseiten der Tassen führen, in die das frisch gebrühte Kaffeegetränk ausgegeben wurde.

Ein Kaffee-Automat mit einem becherartigen, innen glattwandigen Kaffee-Sammelbehälter, in welchen das in einer Brühkammer gebrühte Kaffee-Getränk vor der Ausgabe eingeleitet wird, ist aus der EP 3 298 934 A1 bekannt.

Aus der US 6 397 907 B1 ist weiterhin ein zusammenfaltbarer Trichter bekannt, welcher im aufgefalteten Zustand einen trichterförmig zusammenlaufenden Trichterinnenraum besitzt, dessen Innenwand eine Vielzahl von umlaufenden Stufen besitzt.

Demgemäß ist es eine Aufgabe der Erfindung, einen Kaffee-Automaten zu schaffen, welcher in der Lage ist, ein frisch gebrühtes Kaffeegetränk, insbesondere Espresso, in kürzester Zeit im Wesentlichen ohne Kaffeeschaum bereit zu stellen.

Diese Aufgabe wird erfindungsgemäß durch einen Kaffee-Automaten mit den Merkmalen von Anspruch 1 gelöst.

Weitere Merkmale der Erfindung sind in den Unteransprüchen beschrieben.

Gemäß der Erfindung enthält ein Kaffee-Automat eine Vorrichtung zum Abscheiden von Kaffeeschaum aus Kaffeeflüssigkeit, die einen Behälter mit einem Behälterinnenraum umfasst, der durch eine umlaufende Behälterwand sowie einen Behälterboden begrenzt wird.

Die Vorrichtung umfasst weiterhin einen Zulauf, der oberhalb des Behälterbodens angeordnet ist, und über den der Behälterinnenraum mit Kaffeeflüssigkeit befüllt werden kann. Die Kaffeeflüssigkeit wird hierzu bevorzugt automatisiert in einer bekannten Brüheinheit aus frisch gemahlenen Kaffeebohnen gebrüht; kann alternativ jedoch auch in bekannter Weise semi-manuell in einer bekannten Espressomaschine zubereitet werden. Die Vorrichtung zum Abscheiden von Kaffeeschaum umfasst weiterhin einen am Grund des Behälterbodens angeordneten Flüssigkeitsablauf, aus welchem die von Kaffeeschaum befreite Kaffeeflüssigkeit aus dem Behälterinnenraum abgeführt wird. Der Behälter ist an seiner Oberseite vorzugsweise durch einen Deckel verschließbar, um das Eindringen von Schmutz oder sonstigen Verunreinigungen, bzw. den Austritt von Kaffeedampf und Feuchtigkeit in den Innenraum eines Kaffee-Automaten, in welchem die Vorrichtung zum Einsatz gelangt, zu verhindern.

Die Vorrichtung zum Abscheiden von Kaffeeschaum zeichnet sich dadurch aus, dass der Behälterboden zum Flüssigkeitsablauf hin nach Art eines Trichters zusammenläuft und eine Vielzahl von terrassenartig übereinander angeordneten umlaufenden Stufen aufweist. Die nach Art von Terrassen umlaufenden Stufen besitzen jeweils eine umlaufende Stufenfläche und eine im Winkel zu dieser angeordnete stehende Stufenwand, welche an einer Stufenkante aneinander angrenzen. Obgleich die Stufen auch Unterbrechungen wie z.B. senkrecht zu den Stufenflächen und Wänden verlaufende Trennwände oder Trennstege aufweisen können, sind diese bevorzugt durchgängig umlaufend und weisen keinerlei Unterbrechungen bzw. Trennwände auf, so dass sowohl die Stufenflächen, als auch die Stufenwände und die Stufenkante allesamt geschlossen umlaufen.

Durch die Erfindung ergibt sich der Vorteil, dass die nach dem Brühvorgang aufgrund des Druckabfalls in der Kaffeeflüssigkeit durch die verringerte Kohlendioxidauhahmefähigkeit freigesetzten Kaffeeschaum-Blasen oder Crema-Blasen beim Absinken des Flüssigkeitsspiegels innerhalb des Behälterinnenraums an den umlaufenden Stufenkanten gebrochen werden und zerplatzen. Hierdurch wird das in den Kaffeeschaum-Blasen enthaltene Kohlendioxid freigesetzt und die die Hüllen der Kaffeeschaum-Blasen bildende Kaffeeflüssigkeit kann im noch flüssigen Zustand in die über die Stufenflächen und Stufenwände der sich anschließenden unterhalb liegenden terrassenartig umlaufenden Stufen in noch flüssiger und chemisch unveränderter Form zurück in die Kaffeeflüssigkeit abfließen, während diese allmählich über den Flüssigkeitsablauf aus dem Behälterinnenraum abläuft. Hierbei stellt es einen besonderen Vorteil der Erfindung dar, dass aufgrund der noch sehr hohen Temperatur der Kaffeeflüssigkeit und der vergleichsweise kurzen Zeit zwischen dem Einfüllen der Kaffeeflüssigkeit in den Behälter die Temperatur der Kaffeeflüssigkeit, welche die Wände der Kaffeeschaum-Blasen bildet, nahezu nicht abfällt, so dass deren chemische Zusammensetzung nicht verändert ist, wenn die Flüssigkeit aus den Bläschenwänden in die abfließende Kaffeeflüssigkeit zurück gelangt.

Bei der bevorzugten Ausführungsform der Erfindung ist die Stufenfläche einer jeden Stufe gegenüber einer horizontal verlaufenden Ebene zum Flüssigkeitsablauf hin in einem Winkel von 0° bis + 10°, bevorzugt 2,5 ° bis 7°, geneigt angeordnet. Wie die Anmelderin gefunden hat, ergibt sich durch diese spezielle geometrische Ausgestaltung der Stufen eine besonders wirksame Brechung der Kaffeeschaum-Blasen, die zu einer nahezu vollständigen Beseitigung der Kaffeeschaum-Blasen aus der Kaffeeflüssigkeit führt.

Weiterhin kann es gleichzeitig oder alternativ hierzu vorgesehen sein, dass die stehende Stufenwand einer jeden Stufe mit der an diese angrenzenden Stufenfläche einen Winkel zwischen 77,5 ° und 90 °einschließt, was die Effizienz der Abscheidung der Kaffeeschaum-Blasen weiter verbessert.

Um sicher zu stellen, dass das Flüssigkeitsniveau der über den Flüssigkeitsablauf abfließenden Kaffeeflüssigkeit im Bereich der Stufenkanten sowie auch der Stufenflächen stets parallel zu den Stufenkanten, bzw. Stufenflächen verläuft, umfasst die bevorzugte Ausführungsform der Vorrichtung zum Abscheiden von Kaffeeschaum Stelleinrichtungen, über die die räumliche Lage des Behälters verändert werden kann. Dies können z.B. Stellschrauben sein, über die sich der Behälter z.B. am Gehäuse eines Kaffeeautomaten, welcher die Vorrichtung enthält, abstützt. In gleicher Weise können die Stelleinrichtungen jedoch auch in der Höhe verstellbare Füße sein, auf welchen sich das Gehäuse eines Kaffeeautomaten abstützt, der die Vorrichtung enthält. Durch das Vorsehen von Stelleinrichtungen kann auf mechanisch einfache Weise sicher gestellt werden, dass die umlaufenden Stufenflächen allesamt stets zum Zentrum des Behälters hin geneigt und die umlaufenden Stufenkanten horizontal ausgerichtet sind. Diese horizontale Ausrichtung stellt sicher, dass sich nach dem Ablaufen der Kaffeeflüssigkeit aus dem Behälterinnenraum keine stehenden Ansammlungen von Kaffeeflüssigkeit auf den Stufenflächen bilden können, in denen sich nicht entfernter erkalteter Kaffeeschaum sammeln kann, der in kurzer Zeit zu störenden Verschmutzungen in der Vorrichtung führt.

Obgleich der Behälter der Vorrichtung in der Aufsicht auch eine kreisrunde Querschnittsform aufweisen kann, besitzt dieser bei der bevorzugten Ausführungsform der Erfindung eine im Wesentlichen rechteckige Querschnittsform, d.h. genauer gesagt die Form eines langestreckten Rechtecks mit zwei parallelen längeren und zwei parallelen kürzen Seiten, die jeweils über abgerundete Eckbereiche miteinander verbunden sind. Hierbei weisen die umlaufenden Stufenflächen im Bereich einer ersten sich zwischen den kürzeren Seiten des Behälters erstreckenden gedachten Ebene eine Stufentiefe auf, die größer ist als die Stufentiefe derselben Stufe im Bereich einer senkrecht hierzu zwischen den längeren Seiten des Behälters verlaufenden zweiten gedachten Ebene. Durch diese geometrische Ausgestaltung des Behälters ergibt sich gegenüber einem Behälter mit kreisrundem Querschnitt eine räumlich optimierte Behälterform, die ein geringeres Einbauvolumen und eine vergrößerte Fläche und Kantenlänge der Stufen aufweist.

Nach einem weiteren der Erfindung zugrunde liegenden Gedanken sind die umlaufenden Stufenflächen im Bereich der zwischen den kürzeren Seiten des Behälterinnenraums verlaufenden gedachten Ebene zum Flüssigkeitsablauf hin gegenüber der Horizontalen um einen Winkel zwischen 1° und 5°, bevorzugt 2,5°, geneigt, wobei bevorzugt alle Stufenflächen in den jeweiligen Bereichen denselben Neigungswinkel aufweisen. Hierdurch ergibt sich der Vorteil, dass die Kaffeeflüssigkeit nach dem Befüllen des Behälters über die gesamte Stufenfläche hinweg mit im Wesentlichen der gleichen Geschwindigkeit abläuft, was der Bildung von Strömungswirbeln, die mitunter wiederum zur Bildung von neuen zusätzlichen Kaffeeschaum-Blasen führen können, entgegenwirkt.

Um den Abbau der Kaffeeschaum-Blasen in der Kaffeeflüssigkeit weiter zu begünstigen, kann die Oberfläche der Stufenflächen und/oder der Stufenwände eine Struktur mit einem Rauheitsprofil aufweisen, dessen arithmetischer Mittelwert der Profilordinaten Ra nach DIN EN ISO 4287 (1998-10) und DIN EN ISO 4288 zwischen 1,1 µm und 6,3µm beträgt, und dessen größte Höhe Rz nach derselben Norm zwischen 4,7 µm und 24,0 µm liegt. Wie die Anmelderin gefunden hat, führt der Einsatz einer solchen Struktur in überraschender Weise zu einer deutlichen Verringerung der Kaffeeschaum-Blasen in der Kaffeeflüssigkeit.

Gleichzeitig oder auch alternativ können die umlaufenden Stufenflächen im Bereich der zwischen den längeren Seiten des Behälterinnenraums verlaufenden gedachten Ebene gegenüber der Horizontalen zum Flüssigkeitsablauf hin um einen Winkel zwischen 5° und 10°, bevorzugt 7,5°, geneigt sein, was - wie die Anmelderin gefunden hat - in diesen Bereiche zu einer bestmöglichen Entschäumung der Kaffeeflüssigkeit führt.

Die Wirksamkeit der Entschäumung der Kaffeeflüssigkeit lässt sich bei der zuvor erwähnten langgetreckten Behältergeometrie mit einer Länge des Behälterinnenraums von 90 mm und einer Breite von 45 mm dadurch weiter erhöhen, dass die stehende Stufenwand einer jeden der vorzugsweise sieben Stufen im Bereich der zwischen den kürzeren Seiten des Behälters verlaufenden gedachten Ebene mit der an diese angrenzenden Stufenfläche einen Winkel zwischen 70° und 90°, bevorzugt 77,5°, einschließt, wohingegen die stehenden Stufenwände einer jeden Stufe im Bereich der zwischen den längeren Seiten des Behälters verlaufenden gedachten Ebene mit der an diese angrenzenden Stufenfläche in vorteilhafter Weise einen Winkel zwischen 80° und 100°, bevorzugt 90°, einschließen. Wie die Anmelderin gefunden hat, lässt sich bei den zuvor angegebenen Winkeln ein besonders effizientes Zerplatzen der auf der Oberseite der Kaffeeflüssigkeit schwimmenden Kaffeeschaum-Blasen beobachten, wodurch sich die Anzahl der im Behälter benötigten Stufen im Falle von Espresso auf lediglich sieben Stufen verringern lässt, um eine nahezu vollständige Beseitigung des gesamten Kaffeeschaums zu erzielen.

Selbstverständlich ist die Anzahl der eingesetzten Stufen an das jeweilige Kaffeegetränk angepasst und kann beispielsweise zwischen zwei Stufen für herkömmlichen Kaffee und z.B. 10 Stufen für Espresso variieren.

Bei der bevorzugten Ausführungsform der Erfindung weist der Flüssigkeitsablauf einen Ablaufkanal auf, der eine lang gestreckte, im Wesentlichen rechteckige Querschnittsform oder eine ovale Querschnittsform besitzt. Hierdurch ergibt sich der Vorteil, dass die Länge der den Ablaufkanal umgebenden Stufenkante gegenüber einem Ablaufkanal mit einer kreisrunden Ablauföffnung vergrößert ist, was wiederum das Aufbrechen der Kaffeeschaum-Blasen an der letzten Stufenkante im Bereich des Behälterbodens zusätzlich begünstigt und die Abscheidewirkung der Vorrichtung verbessert.

Um auch diejenigen Kaffeeschaum-Blasen zu beseitigen, die im Bereich des Zentrums des Behälterinnenraums auf der Kaffeeflüssigkeit verbleiben, ohne zuvor durch eine der bevorzugt sieben Stufenkanten gebrochen worden zu sein, können in der Seitenwand des Ablaufkanals weitere treppenartige Stufen angeordnet sein.

Wie die Anmelderin gefunden hat, ist es hierbei in Hinblick auf die Effizienz der Kaffeschaumentfernung von besonderem Vorteil, wenn die weiteren treppenartigen Stufen auf der dem Behälterboden abgewandten Seite des Ablaufkanals angeordnet sind und der Ablaufkanal zwischen dem Grund des Behälterbodens und den weiteren treppenartigen Stufen einen glattwandigen Kanalabschnitt besitzt, über welchen die Kaffeeflüssigkeit vom Behälterboden aus auf die weiteren treppenartigen Stufen gelangt. Um einer Verwirbelung der von Kaffeeschaum-Blasen befreiten Kaffeeflüssigkeit und eine damit verbundene Neubildung von Kaffeeschaum-Blasen im Bereich des glattwandigen Kanalabschnitts soweit wie möglich auszuschließen, ist der glattwandige Abschnitt bevorzugt geradlinig ausgeführt.

Nach einem weiteren der Erfindung zugrunde liegenden Gedanken ist unterhalb der treppenartigen Stufen eine Auslassöffnung geformt ist, über die die Kaffeeflüssigkeit aus dem darüber liegenden Behälter abläuft. Die Auslassöffnung ist bevorzugt schlitzförmig ausgeführt und weist eine kleinere Querschnittsfläche als der Zulauf auf, über welchen die frisch gebrühte Kaffeeflüssigkeit zur Beseitigung der Kaffeeschaum-Blasen in einem Schwall aus der Brühkammer in den Behälter eingeleitet wird. Die Querschnittsfläche der Auslassöffnung besitzt bevorzugt eine solche Größe, dass die von Kaffeeschaum/Crema befreite Kaffeeflüssigkeit innerhalb von 10 bis 30 Sekunden vollständig aus dem Behälter abgelaufen ist. Der Behälter kann im Falle von Espresso z.B. ein Fassungsvermögen von ein bis zwei gefüllten Espressotassen haben, d.h. z.B. 50 bis 100 ml, vorzugsweise 80 ml. Im Falle von herkömmlichem schwarzen Kaffee kann der Behälter hingegen eine Größe von ein bis zwei gefüllten herkömmlichen Kaffeetassen, d.h. ein Fassungsvermögen von 100 bis 300 ml besitzen.

Alternativ kann es vorgesehen sein, dass der Ablauf über ein Ventil, insbesondere ein elektro-mechanisch betätigtes Ventil, verschließbar ist. Das Ventil wird dazu während, bzw. nach dem Einfüllen der Kaffeeflüssigkeit über den Zulauf so weit geöffnet, dass der Flüssigkeitspegel der Kaffeeflüssigkeit 4 auf ein Flüssigkeitsniveau erhöht wird, das oberhalb oder auf Höhe der terrassenartig angeordneten Stufen liegt. Durch den Einsatz eines elektromechanisch betätigbaren Ventils ergibt sich der Vorteil, dass die Durchlaufzeiten für die Kaffeeflüssigkeit durch den Behälter den jeweiligen Produkten angepasst werden können, so dass beispielsweise durch ein zu ¼ geöffneten Ventil zum einen eine optimale Abscheidung von Kaffeeschaum-Blasen erhalten werden kann, und zum anderen bei vollständig geöffnetem Ventil ein glatter Durchfluss der frisch gebrühten Kaffeeflüssigkeit durch den Behälter ermöglicht wird, der nahezu keinerlei Abscheidung von Kaffeeschaum-Blasen an den Stufen bewirkt.

Bei der bevorzugten Ausführungsform der Erfindung sind die umlaufende Behälterwand mit den darin geformten Stufen und der Behälterboden mit dem Flüssigkeitsablauf als ein einteiliges Bauteil, d.h. ein integrales Bauteil, das lediglich aus einem Stück besteht, geformt. Dieses kann insbesondere als Kunststoff-Spritzgussteil ausgeführt sein, welches bevorzugt als Einsatz in ein Gehäuse zur Aufnahme des Behälters eingesetzt und wieder aus diesem entnommen werden kann, welches sich beispielsweise in einem Kaffee-Automaten befindet.

Die Erfindung wird nachfolgend mit Bezug auf die Zeichnungen anhand einer bevorzugten Ausführungsform der Erfindung beschrieben.

In den Zeichnungen zeigen:
- Fig. 1: eine schematische räumliche Teildarstellung eines erfindungsgemässen Kaffee-Automaten mit einer darin enthaltenen Vorrichtung,
- Fig. 2: eine Schnittdarstellung der Vorrichtung entlang einer sich parallel zu den kurzen Seiten des Behälters erstreckenden Schnittebene,
- Fig. 3: eine weitere Schnittdarstellung entlang einer sich parallel zu den langen Seiten des Behälters erstreckenden Schnittebene,
- Fig. 4 a: eine vergrößerte Teilansicht der Schnittdarstellung von Fig. 2,

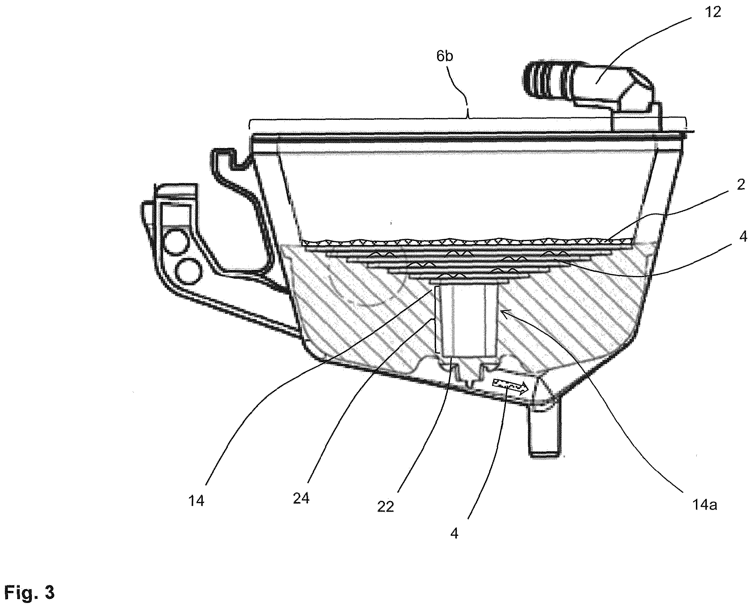

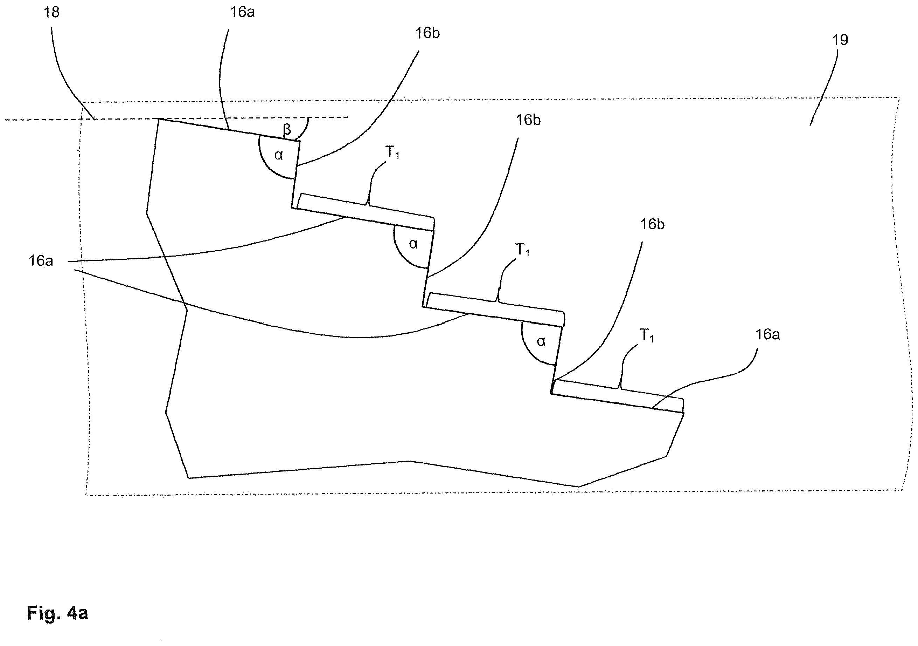

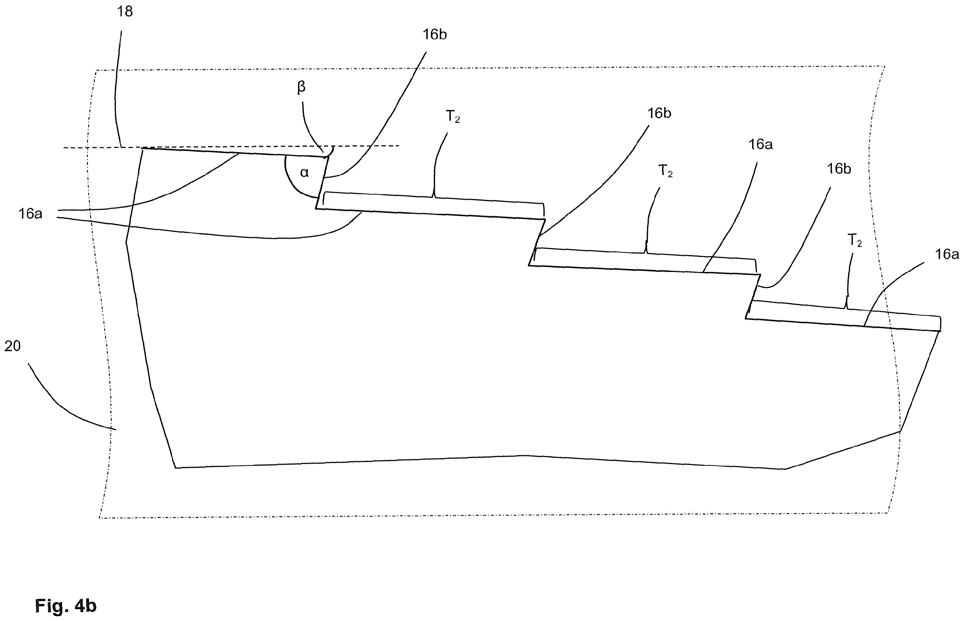

- Fig. 4 b: eine vergrößerte Teilansicht der Schnittdarstellung von Fig. 3, und

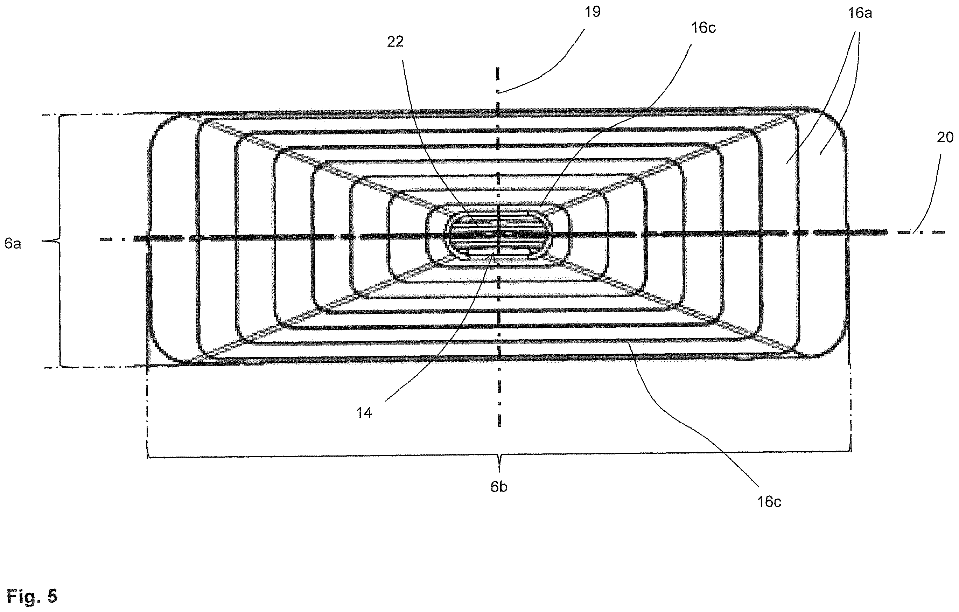

- Fig. 5: eine Aufsicht auf den Behälter bei einer bevorzugten Ausführungsform der Erfindung mit einem langgestreckten, im Wesentlichen rechteckigen Behälterquerschnitt.

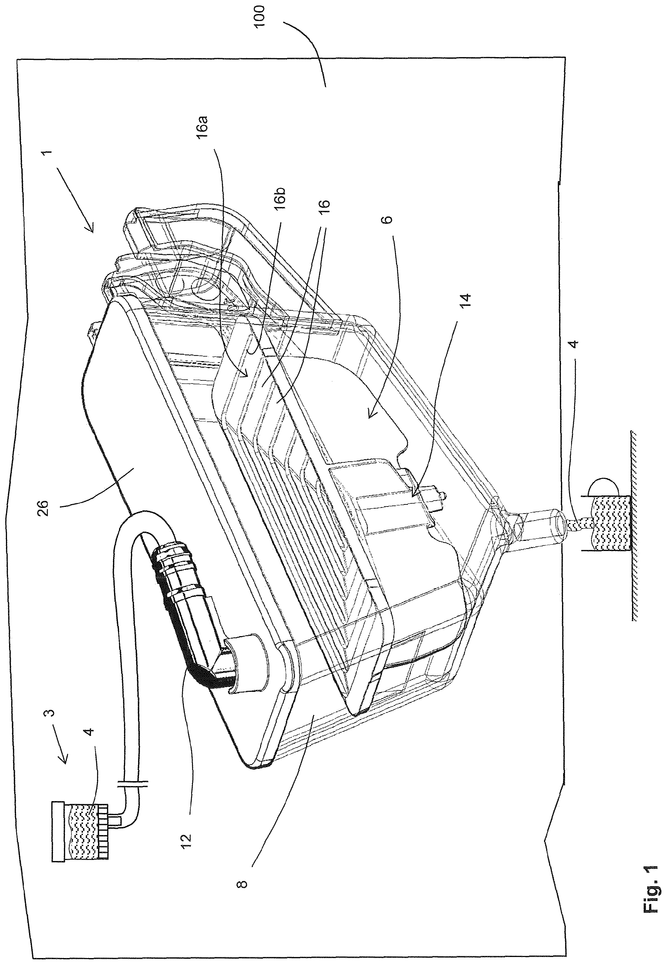

Wie in den Figuren 1 bis 5 gezeigt ist, umfasst eine Vorrichtung 1 zum Abscheiden von Kaffeeschaum 2 aus Kaffeeflüssigkeit 4 für ein in Fig. 1 angedeutetes Kaffeegetränk einen Behälter 6 mit einem Behälterinnenraum, der durch eine umlaufende Behälterwand 8 sowie einen Behälterboden 10 begrenzt wird.

Die Vorrichtung 1 weist weiterhin einen Zulauf 12 für Kaffeeflüssigkeit 4 auf, der oberhalb des Behälterbodens 10 angeordnet ist, und über den der Behälterinnenraum befüllbar ist. Die Kaffeeflüssigkeit 4 wird in einer lediglich schematisch angedeuteten bekannten Brüheinheit 3 gebrüht.

Die Vorrichtung 1 umfasst weiterhin einen am Grund des Behälterbodens 10 angeordneten Flüssigkeitsablauf 14, aus welchem die von Schaum 2 befreite Kaffeeflüssigkeit 4 aus dem Behälterinnenraum abgeführt wird. Der Behälter 6, der im Falle eines Espresso-Automaten ein Volumen von z.B. 80 ml besitzen kann, ist an seiner Oberseite vorzugsweise durch einen Deckel 28 verschließbar, um das Eindringen von Schmutz oder sonstigen Verunreinigungen, bzw. den Austritt von Kaffeedampf in den Innenraum eines in den Zeichnungen lediglich schematisch angedeuteten Kaffee-Automaten 100, in welchem die Vorrichtung zum Einsatz gelangt, zu verhindern.

Wie den Darstellungen der Figuren 1 bis 3 weiterhin entnommen werden kann, läuft der Behälterboden 10 zum Flüssigkeitsablauf 14, d.h. nach unten hin, nach Art eines Trichters zusammenläuft und weist eine Vielzahl von terrassenartig übereinander angeordneten umlaufenden Stufen 16 auf, die nach Art von Terrassen umlaufen. Bei der bevorzugten Ausführungsform der Erfindung besitzt jede der bevorzugt sieben Stufen 16 jeweils eine umlaufende Stufenfläche 16a und eine im Winkel α zu dieser angeordnete stehende Stufenwand 16b, welche an einer Stufenkante 16c aneinander angrenzen. Obgleich die Stufen 16 auch Unterbrechungen wie z.B. senkrecht zu den Stufenflächen und Wänden verlaufende Trennwände aufweisen können, sind diese bevorzugt durchgängig umlaufend und weisen keinerlei Unterbrechungen bzw. Trennwände auf, sodass sowohl die Stufenflächen 16a, als auch die Stufenwände 16b und die Stufenkanten 16c allesamt geschlossen umlaufend sind.

Wie den Darstellungen der Fig. 4a und 4b im Detail zu entnehmen ist, sind die Stufenflächen 16a von bevorzugt allen Stufen gegenüber einer horizontal verlaufenden Ebene 18 zum Flüssigkeitsablauf 14 hin in einem Winkel β von 0° bis + 10°, bevorzugt 2,5° bis 7°, geneigt angeordnet. Hierbei schließt die stehende Stufenwand 16b einer jeden Stufe 16 mit der an diese angrenzenden Stufenfläche 16a einen Winkel zwischen 77,5° und 90°ein. Um sicher zu stellen, dass das Flüssigkeitsniveau der über den Flüssigkeitsablauf 14 abfließenden Kaffeeflüssigkeit 4 im Bereich der Stufenkanten 16c sowie auch der Stufenflächen 16a stets parallel zu den Stufenkanten, bzw. Stufenflächen verläuft, umfasst die bevorzugte Ausführungsform der Vorrichtung 1 nicht näher gezeigte Stelleinrichtungen, über die die räumliche Lage des Behälters 6 verändert werden kann. Dies können z.B. Stellschrauben sein, über die sich der Behälter 6 z.B. am Gehäuse des Kaffeeautomaten 100 abstützt.

Wie in Fig. 1 und der Aufsicht von Fig. 5 weiterhin gezeigt ist, besitzt der Behälter 6 bei der bevorzugten Ausführungsform der Erfindung eine im Wesentlichen rechteckige Querschnittsform, d.h. genauer gesagt die Form eines langestreckten Rechtecks mit zwei parallelen längeren und zwei parallelen kürzen Seiten, die jeweils über abgerundete Eckbereiche miteinander verbunden sind. Hierbei weisen die umlaufenden Stufenflächen 16a im Bereich einer in Fig. 4a gezeigten ersten gedachten Ebene 19, die sich zwischen den kürzeren Seiten 6a des Behälters 6 erstreckt, eine Stufentiefe T1 auf, die größer ist als die Stufentiefe T2 derselben Stufe im Bereich einer zweiten gedachten Ebene 20, die sich - wie in Fig. 4b gezeigt - senkrecht zu der ersten gedachten Ebene 19 zwischen den längeren Seiten 6b des Behälters 6 erstreckt. Die Stufentiefe T1 kann bei einer Behälterlänge von 90 mm und einer Behälterbreite 45 mm beispielsweise 5 mm und die Stufentiefe T2 3,5 mm betragen. Durch diese geometrische Ausgestaltung des Behälters 6 ergibt sich gegenüber einem Behälter 6 mit kreisrundem Querschnitt eine räumlich optimierte Behälterform, die ein geringeres Einbauvolumen und eine vergrößerte Fläche und Kantenlänge der Stufen 16 ermöglicht.

Wie den Darstellungen der Fig. 4a und 4b weiterhin im Detail entnommen werden kann, sind die umlaufenden Stufenflächen 16a im Bereich der zwischen den kürzeren Seiten 6a des Behälterinnenraums verlaufenden gedachten Ebene 19 zum Flüssigkeitsablauf 14 hin gegenüber der Horizontalen 18 um einen Winkel β zwischen 1° und 5°, bevorzugt 2,5°, geneigt. Hierbei besitzen bevorzugt alle Stufenflächen 16a in den jeweiligen Bereichen denselben Neigungswinkel β. Dies führt in vorteilhafter Weise dazu, dass die Kaffeeflüssigkeit 4 während der sich an den schwallartigen Befüllvorgang des Behälters 6 anschließenden langsamen Entleerung über die gesamte Stufenfläche 6a hinweg mit im Wesentlichen der gleichen Geschwindigkeit abläuft, was der Bildung von Strömungswirbeln, die mitunter wiederum zur Bildung von neuen zusätzlichen Kaffeeschaum-Blasen führen können, entgegenwirkt.

Gleichzeitig oder auch alternativ können die umlaufenden Stufenflächen 16a im Bereich der zwischen den längeren Seiten 6b des Behälterinnenraums verlaufenden gedachten Ebene 20, wie in Fig. 4a gezeigt, gegenüber der Horizontalen zum Flüssigkeitsablauf 14 hin um einen Winkel β zwischen 5° und 10°, bevorzugt 7,5°, geneigt sein.

Die Wirksamkeit der Entschäumung der Kaffeeflüssigkeit 4 lässt sich bei der zuvor erwähnten langgetreckten Behältergeometrie dadurch weiter erhöhen, dass die stehende Stufenwand 16b einer jeden der vorzugsweise sieben Stufen 16 im Bereich der zwischen den kürzeren Seiten 6a des Behälters 6 verlaufenden gedachten Ebene 19 mit der an diese angrenzenden Stufenfläche 16b einen Winkel α zwischen 70° und 90°, bevorzugt 77,5°, einschließt. Demgegenüber schließen die stehenden Stufenwände 16b einer jeden Stufe 16 im Bereich der zwischen den längeren Seiten 6b des Behälters 6 verlaufenden gedachten Ebene 20 mit der jeweils an diese angrenzenden Stufenfläche 16a bevorzugt einen Winkel α zwischen 80° und 100°, bevorzugt 90°, ein, wie dies in Fig. 4b gezeigt ist.

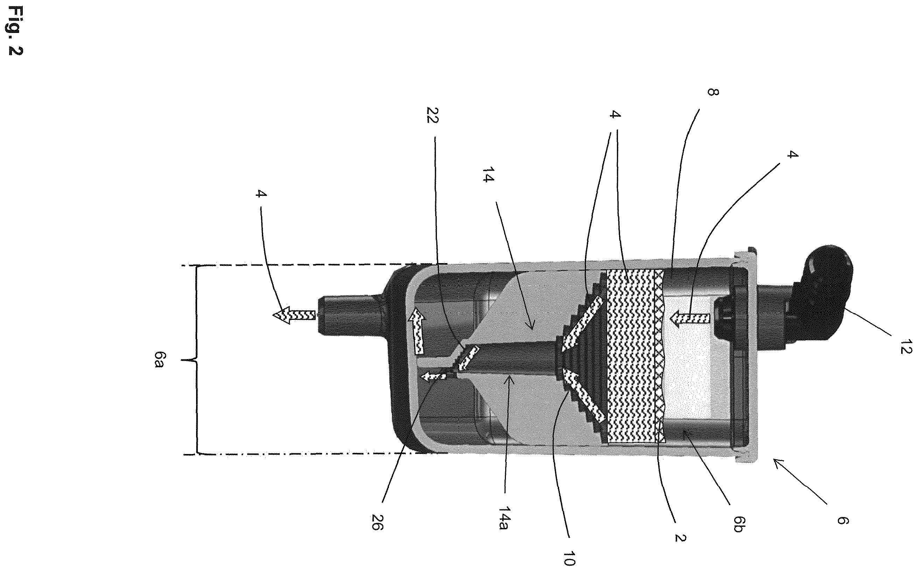

Wie den Darstellungen der Figuren 2, 3 und 5 weiterhin entnommen werden kann, weist der Flüssigkeitsablauf 14 einen Ablaufkanal 14a auf, der eine lang gestreckte ovale Querschnittsform besitzt. Dies führt zu dem Vorteil, dass die Länge der den Ablaufkanal 14a umgebenden untersten Stufenkante 16c gegenüber einem Ablaufkanal mit einer kreisrunden Ablauföffnung vergrößert ist, wodurch das Aufbrechen der Kaffeeschaum-Blasen an der letzten untersten Stufenkante 16c im Bereich des Behälterbodens 10 zusätzlich gefördert wird.

Um auch diejenigen Kaffeeschaum-Blasen zu beseitigen, die während der Entleerung des Behälters 6 im Bereich des Zentrums des Behälterinnenraums auf der Kaffeeflüssigkeit 4 verbleiben, können in der Seitenwand des Ablaufkanals 14a weitere treppenartige Stufen 22 geformt sein, wie dies in Fig. 2 gezeigt ist. Die weiteren treppenartigen Stufen 22 sind bevorzugt auf der dem Behälterboden 10 abgewandten Seite des Ablaufkanals 14a angeordnet, wobei der Ablaufkanal 14a zwischen dem Grund des Behälterbodens 10 und den weiteren treppenartigen Stufen 22 einen glattwandigen Kanalabschnitt 24 besitzt, der bevorzugt vertikal verläuft und über den die Kaffeeflüssigkeit 4 vom Behälterboden 10 aus auf die weiteren treppenartigen Stufen 22 geleitet wird. Um einer Verwirbelung der von Kaffeeschaum-Blasen befreiten Kaffeeflüssigkeit und eine damit verbundene Neubildung von Kaffeeschaum-Blasen im Bereich des glattwandigen Kanalabschnitts 24 soweit wie möglich auszuschließen, ist dieser, wie in Fig. 2 und 4 gezeigt, vorzugsweise geradlinig ausgeführt.

Um den Abbau der Kaffeeschaum-Blasen in der Kaffeeflüssigkeit 4 weiter zu begünstigen, besitzen die Stufenflächen 16a und vorzugsweise auch die Stufenwände 16b und der Ablaufkanal 24 und die weiteren treppenartigen Stufen 22 in vorteilhafter Weise eine Oberfläche mit einer rauen Struktur. Die Struktur weist in besonders vorteilhafter Weise ein Rauheitsprofil auf, dessen arithmetischer Mittelwert der Profilordinaten (Ra) nach DIN EN ISO 4287 (1998-10) und DIN EN ISO 4288 zwischen 1,1 µm und 6,3µm beträgt, und dessen größte Höhe (Rz) nach derselben Norm zwischen 4,7 µm und 24,0 µm liegt.

Nach einem weiteren der Erfindung zugrunde liegenden Gedanken befindet sich unterhalb der treppenartigen Stufen 22 eine Auslassöffnung 26, über die die Kaffeeflüssigkeit 4 aus dem darüber liegenden Behälter 6 abläuft. Die Auslassöffnung 26 ist bevorzugt schlitzförmig ausgeführt und weist eine geringere Querschnittsfläche als der Zulauf 12 auf, über welchen die frisch gebrühte Kaffeeflüssigkeit 4 zur Beseitigung der Kaffeeschaum-Blasen in einem Schwall in den Behälter 6 eingeleitet wird. Die Querschnittsfläche der Auslassöffnung 26 besitzt bevorzugt eine solche Größe, dass die von Kaffeeschaum 2 befreite Kaffeeflüssigkeit 4 vorzugsweise innerhalb von 10 bis 30 Sekunden vollständig aus dem Behälter 6 abläuft. Der Behälter 6 kann im Falle von Espresso z.B. ein Fassungsvermögen von ein bis zwei gefüllten Espressotassen haben, d.h. z.B. 50 bis 100 ml und weist bei der bevorzugten Ausführungsform der Erfindung ein Fassungsvermögen von ca. 80 ml auf.

Alternativ kann es vorgesehen sein dass der Ablauf über ein Ventil, insbesondere ein elektro-mechanisch betätigtes Ventil, verschließbar ist. Das Ventil wird dazu während, bzw. nach dem Einfüllen der Kaffeeflüssigkeit 4 über den Zulauf 12 soweit geöffnet, dass der Flüssigkeitspegel der Kaffeeflüssigkeit 4 auf ein Flüssigkeitsniveau erhöht wird, das oberhalb oder auf Höhe der terrassenartig angeordneten Stufen 16 liegt. Durch den Einsatz eines elektromechanisch betätigbaren Ventils ergibt sich der Vorteil, dass die Durchlaufzeiten für die Kaffeeflüssigkeit durch den Behälter 6 den jeweiligen Produkten angepasst werden kann, so dass beispielsweise durch ein zu ¼ geöffneten Ventil zum einen eine optimale Abscheidung von Kaffeeschaum-Blasen 2 erhalten werden kann, und zum anderen bei vollständig geöffnetem Ventil ein glatter Durchfluss der frisch gebrühten Kaffeeflüssigkeit 4 durch den Behälter 6 ermöglicht wird, die nahezu keinerlei Abscheidung von Kaffeeschaum-Blasen 2 an den Stufen 6 bewirkt.

Bei der bevorzugten Ausführungsform der Erfindung ist die umlaufende Behälterwand 8 mit den darin geformten Stufen 16 und der Behälterboden 10 mit dem Flüssigkeitsablauf 14 als ein einteiliges Bauteil, d.h. ein Bauteil, dass lediglich aus einem Stück besteht, geformt. Dieses kann insbesondere als Kunststoff-Spritzgussteil ausgeführt sein, welches bevorzugt als Einsatz in ein Gehäuse zur Aufnahme des Behälters 6 eingesetzt und wieder aus diesem entnommen werden kann, welches sich beispielsweise in dem Kaffee-Automat 100 befindet.

Die Erfindung betrifft ferner die Verwendung einer zuvor beschriebenen Vorrichtung 1 umfassend einen Behälter 6 mit einem Behälterinnenraum, der durch eine umlaufende Behälterwand 8 sowie einen Behälterboden 10 begrenzt wird, mit einem oberhalb des Behälterbodens 10 angeordneten Zulauf 12, über welchen der Behälterinnenraum mit Kaffeeflüssigkeit 4 befüllbar ist, sowie mit einem am Grund des Behälterbodens 10 angeordneten Flüssigkeitsablauf 14, aus welchem die von Kaffeeschaum 2 befreite Kaffeeflüssigkeit 4 aus dem Behälterinnenraum abführbar ist, wobei
der Behälterboden 10 zum Flüssigkeitsablauf 14 hin trichterartig zusammenläuft und eine Vielzahl von terrassenartig übereinander angeordneten umlaufenden Stufen 16 aufweist, die jeweils eine umlaufende Stufenfläche 16a und eine im Winkel α zu dieser angeordnete stehende Stufenwand 16b besitzen, welche an einer Stufenkante 16c aneinander angrenzen, zum Entfernen von Kaffeeschaum 2 aus Kaffeeflüssigkeit.

### Liste der Bezugszeichen

- 1: Vorrichtung
- 2: Kaffeeschaum/Crema
- 3: Brüheinheit
- 4: Kaffeeflüssigkeit
- 6: Behälter
- 6a: kürzere Seiten des Behälters
- 6b: längere Seiten des Behälters
- 8: umlaufende Behälterwand
- 10: Behälterboden
- 12: Zulauf für Kaffeeflüssigkeit
- 14: Flüssigkeitsablauf
- 14a: Ablaufkanal
- 16: terrassenartige umlaufende Stufen
- 16a: Stufenfläche
- 16b: Stufenwand
- 16c: Stufenkante
- 18: horizontal verlaufende Ebene
- 19: gedachte Ebene zwischen kürzeren Seiten des Behälters
- 20: gedachte Ebene zwischen längeren Seiten des Behälters
- 22: weitere treppenartige Stufen
- 24: glattwandiger Kanalabschnitt des Ablaufkanals
- 26: Auslassöffnung unterhalb der treppenartigen Stufen
- 28: Deckel zum Verschließen des Behälters
- 100: Kaffee-Automat
- α: Winkel zwischen Stufenfläche und Stufenwand
- β: Winkel zwischen Stufenfläche und horizontal verlaufender Ebene
- T₁: Stufentiefe der Stufen im Bereich der Ebene 19
- T₂: Stufentiefe der Stufen im Bereich der Ebene 20

## Patentansprüche

1. Kaffee-Automat (100) enthaltend eine Vorrichtung (1) zum Entfernen von Kaffeeschaum (2) aus Kaffeeflüssigkeit (4), umfassend einen Behälter (6) mit einem Behälterinnenraum, der durch eine umlaufende Behälterwand (8) sowie einen Behälterboden (10) begrenzt wird, mit einem oberhalb des Behälterbodens (10) angeordneten Zulauf (12), über welchen der Behälterinnenraum mit Kaffeeflüssigkeit (4) befüllbar ist, sowie mit einem am Grund des Behälterbodens (10) angeordneten Flüssigkeitsablauf (14), aus welchem die von Kaffeeschaum (2) befreite Kaffeeflüssigkeit (4) aus dem Behälterinnenraum abführbar ist,
**dadurch gekennzeichnet, dass**
der Behälterboden (10) zum Flüssigkeitsablauf (14) hin trichterartig zusammenläuft und eine Vielzahl von terrassenartig übereinander angeordneten umlaufenden Stufen (16) aufweist, die jeweils eine umlaufende Stufenfläche (16a) und eine im Winkel (α) zu dieser angeordnete stehende Stufenwand (16b) besitzen, welche an einer Stufenkante (16c) aneinander angrenzen.

2. Kaffee-Automat nach Anspruch 1,
**dadurch gekennzeichnet, dass**
die Stufenfläche (16a) einer jeden Stufe (16) gegenüber einer horizontal verlaufenden Ebene (18) zum Flüssigkeitsablauf (14) hin in einem Winkel (β) von 0° bis + 10°, bevorzugt 2,5° bis 7°, geneigt angeordnet ist, und/oder dass die stehende Stufenwand (16b) einer jeden Stufe (16) mit der an diese angrenzenden Stufenfläche (16a) einen Winkel zwischen 77,5 ° und 90 °einschließt.

3. Kaffee-Automat nach Anspruch 1 oder 2,
**dadurch gekennzeichnet, dass**
die räumliche Lage des Behälters (6) zur horizontalen Ausrichtung der terrassenartig angeordneten umlaufenden Stufen (16) über Stelleinrichtungen, insbesondere Stellschrauben, veränderbar ist.

4. Kaffee-Automat nach einem der vorhergehenden Ansprüche,
**dadurch gekennzeichnet, dass**
der Behälter (6) in der Aufsicht eine im Wesentlichen rechteckige Querschnittsform aufweist, und dass die umlaufenden Stufenflächen (16a) im Bereich einer ersten sich zwischen den kürzeren Seiten (6a) des Behälters (6) erstreckenden gedachten Ebene (19) eine Stufentiefe (T₁) aufweisen, die größer ist als die Stufentiefe (T₂) derselben Stufe im Bereich einer senkrecht hierzu zwischen den längeren Seiten (6b) des Behälters (6) verlaufenden zweiten gedachten Ebene (20).

5. Kaffee-Automat nach Anspruch 4,
**dadurch gekennzeichnet, dass**
die umlaufende Stufenflächen (16a) im Bereich der zwischen den kürzeren Seiten (6a) des Behälterinnenraums verlaufenden gedachten Ebene (19) zum Flüssigkeitsablauf (14) hin gegenüber der Horizontalen (18) um einen Winkel (β) zwischen 1° und 5°, bevorzugt 2,5°, geneigt sind, und/oder dass die umlaufenden Stufenflächen (16a) im Bereich der zwischen den längeren Seiten (6b) des Behälterinnenraums verlaufenden gedachten zweiten Ebene (20) gegenüber der Horizontalen (18) zum Flüssigkeitsablauf (14) hin um einen Winkel (β) zwischen 5° und 10°, bevorzugt 7,5°, geneigt sind.

6. Kaffee-Automat nach Anspruch 4 oder 5,
**dadurch gekennzeichnet, dass**
die stehende Stufenwand (16b) einer jeden Stufe (16) im Bereich der zwischen den kürzeren Seiten (6a) des Behälters (6) verlaufenden gedachten Ebene (19) mit der an diese angrenzenden Stufenfläche (16b) einen Winkel (α) zwischen 70° und 90°, bevorzugt 77,5°, einschließt, und/oder dass die stehende Stufenwand (16b) einer jeden Stufe (16) im Bereich der zwischen den längeren Seiten (6b) des Behälters verlaufenden gedachten Ebene (20) mit der an diese angrenzenden Stufenfläche 16a einen Winkel (α) zwischen 80° und 100°, bevorzugt 90°, einschließt.

7. Kaffee-Automat nach einem der vorhergehenden Ansprüche,
**dadurch gekennzeichnet, dass**
der Flüssigkeitsablauf (14) einen Ablaufkanal (14a) umfasst, der eine lang gestreckte, im Wesentlichen rechteckige Querschnittsform oder eine ovale Querschnittsform aufweist.

8. Kaffee-Automat nach einem der vorhergehenden Ansprüche,
**dadurch gekennzeichnet, dass**
in der Seitenwand des Ablaufkanals (14a) weitere treppenartige Stufen (22) angeordnet sind.

9. Kaffee-Automat nach Anspruch 8,
**dadurch gekennzeichnet, dass**
die weiteren treppenartigen Stufen (22) auf der dem Behälterboden (10) abgewandten Seite des Ablaufkanals (14a) angeordnet sind, und dass der Ablaufkanal (14a) zwischen dem Grund des Behälterbodens (10) und den weiteren treppenartigen Stufen (22) einen glattwandigen, bevorzugt geradlinigen Kanalabschnitt (24) besitzt, über welchen die Kaffeeflüssigkeit (4) vom Behälterboden (10) aus auf die weiteren treppenartigen Stufen (22) gelangt.

10. Kaffee-Automat nach Anspruch 9,
**dadurch gekennzeichnet, dass**
unterhalb der treppenartigen Stufen (22) eine Auslassöffnung (26) geformt ist, über die die Kaffeeflüssigkeit (4) aus dem oberhalb angeordneten Behälter (6) abläuft.

11. Kaffee-Automat nach Anspruch 9,
**dadurch gekennzeichnet, dass**
die Auslassöffnung (26) insbesondere schlitzförmig ausgebildet ist und eine geringere Querschnittsfläche als der Zulauf (12) aufweist, und/oder dass der Ablauf über ein Ventil verschließbar ist, derart, dass der Flüssigkeitspegel der Kaffeeflüssigkeit (4) beim Einfüllen derselben über den Zulauf (12) in den Behälterinnenraum auf ein Flüssigkeitsniveau erhöhbar ist, welches oberhalb oder auf Höhe der terrassenartig angeordneten Stufen (16) liegt.

12. Kaffee-Automat nach einem der vorhergehenden Ansprüche,
**dadurch gekennzeichnet, dass**
die umlaufende Behälterwand (8) mit den darin geformten Stufen (16) und der Behälterboden (10) mit dem Flüssigkeitsablauf (14) als einteiliges Bauteil, insbesondere als Spritzgussteil geformt sind, welches bevorzugt als Einsatz in ein Gehäuse zur Aufnahme des Behälters (6) einsetzbar ist.

13. Kaffee-Automat nach einem der vorhergehenden Ansprüche,
**dadurch gekennzeichnet, dass**
der Behälter (6) an seiner Oberseite durch einen Deckel (28) verschließbar ist.

14. Kaffee-Automat nach einem der vorhergehenden Ansprüche,
**dadurch gekennzeichnet, dass**
die Oberfläche wenigstens einer der Stufenflächen (16a) und/oder einer der Stufenwände (16b) eine Struktur mit einem Rauheitsprofil aufweisen, dessen arithmetischer Mittelwert der Profilordinaten (Ra) zwischen 1,1 µm und 6,3 µm beträgt, und dessen größte Höhe (Rz) zwischen 4,7 µm und 24,0 µm liegt.

15. Verwendung einer Vorrichtung (1) umfassend einen Behälter (6) mit einem Behälterinnenraum, der durch eine umlaufende Behälterwand (8) sowie einen Behälterboden (10) begrenzt wird, mit einem oberhalb des Behälterbodens (10) angeordneten Zulauf (12), über welchen der Behälterinnenraum mit Kaffeeflüssigkeit (4) befüllbar ist, sowie mit einem am Grund des Behälterbodens (10) angeordneten Flüssigkeitsablauf (14), aus welchem die von Kaffeeschaum (2) befreite Kaffeeflüssigkeit (4) aus dem Behälterinnenraum abführbar ist, wobei der Behälterboden (10) zum Flüssigkeitsablauf (14) hin trichterartig zusammenläuft und eine Vielzahl von terrassenartig übereinander angeordneten umlaufenden Stufen (16) aufweist, die jeweils eine umlaufende Stufenfläche (16a) und eine im Winkel (α) zu dieser angeordnete stehende Stufenwand (16b) besitzen, welche an einer Stufenkante (16c) aneinander angrenzen, zum Entfernen von Kaffeeschaum (2) aus Kaffeeflüssigkeit.

## Claims

1. Coffee machine (100) containing an apparatus (1) for removing coffee foam (2) from coffee liquid (4), comprising a container (6) with a container interior, which is delimited by a peripheral container wall (8) and a container bottom (10), with an inflow (12), which is arranged above the container bottom (10) and via which the container interior is fillable with coffee liquid (4), and with a liquid outflow (14), which is arranged at the base of the container bottom (10) and from which the coffee liquid (4) freed of coffee foam (2) is dischargeable from the container interior,
**characterized in that**
the container bottom (10) runs together in a funnel-like manner towards the liquid outflow (14) and has a multiplicity of peripheral steps (16) arranged one above the other in a terrace-like manner and having in each case a peripheral step face (16a) and a standing step wall (16b), arranged at an angle (α) thereto, which adjoin one another at a step edge (16c).

2. Coffee machine according to Claim 1,
**characterized in that**
the step face (16a) of each step (16) is arranged inclined at an angle (β) of 0° to +10°, preferably 2.5° to 7°, towards the liquid outflow (14) in relation to a horizontally extending plane (18), and/or **in that** the standing step wall (16b) of each step (16) includes an angle of between 77.5° and 90° with the step face (16a) adjoining it.

3. Coffee machine according to Claim 1 or 2,
**characterized in that**
the spatial position of the container (6) in relation to the horizontal orientation of the peripheral steps (16) arranged in a terrace-like manner is able to be varied via adjustment devices, in particular setting screws.

4. Coffee machine according to one of the preceding claims,
**characterized in that**,
in plan view, the container (6) has a substantially rectangular cross-sectional shape, and **in that** the peripheral step faces (16a) have in the region of a first imaginary plane (19), extending between the shorter sides (6a) of the container (6), a step depth (T₁) which is greater than the step depth (T₂) of the same step in the region of a second imaginary plane (20), extending perpendicularly thereto between the longer sides (6b) of the container (6).

5. Coffee machine according to Claim 4,
**characterized in that**,
in the region of the imaginary plane (19) extending between the shorter sides (6a) of the container interior, the peripheral step faces (16a) are inclined by an angle (β) of between 1° and 5°, preferably 2.5°, towards the liquid outflow (14) in relation to the horizontal (18), and/or **in that**, in the region of the imaginary second plane (20) extending between the longer sides (6b) of the container interior, the peripheral step faces (16a) are inclined by an angle (β) of between 5° and 10°, preferably 7.5°, towards the liquid outflow (14) in relation to the horizontal (18).

6. Coffee machine according to Claim 4 or 5,
**characterized in that**,
in the region of the imaginary plane (19) extending between the shorter sides (6a) of the container (6), the standing step wall (16b) of each step (16) includes an angle (α) of between 70° and 90°, preferably 77.5°, with the step face (16b) adjoining it, and/or **in that**, in the region of the imaginary plane (20) extending between the longer sides (6b) of the container, the standing step wall (16b) of each step (16) includes an angle (α) of between 80° and 100°, preferably 90°, with the step face (16a) adjoining it.

7. Coffee machine according to one of the preceding claims,
**characterized in that**
the liquid outflow (14) comprises an outflow channel (14a) which has an elongate, substantially rectangular cross-sectional shape or an oval cross-sectional shape.

8. Coffee machine according to one of the preceding claims,
**characterized in that**
further stair-like steps (22) are arranged in the side wall of the outflow channel (14a).

9. Coffee machine according to Claim 8,
**characterized in that**
the further stair-like steps (22) are arranged on that side of the outflow channel (14a) which faces away from the container bottom (10), and **in that** the outflow channel (14a), between the base of the container bottom (10) and the further stair-like steps (22), has a smooth-walled, preferably rectilinear, channel portion (24) via which the coffee liquid (4) passes from the container bottom (10) to the further stair-like steps (22).

10. Coffee machine according to Claim 9,
**characterized in that**,
below the stair-like steps (22), there is formed an outlet opening (26) via which the coffee liquid (4) flows out from the container (6) arranged above.

11. Coffee machine according to Claim 9,
**characterized in that**
the outlet opening (26) in particular is of slot-shaped form and has a smaller cross-sectional area than the inflow (12), and/or **in that** the outflow is able to be closed off via a valve in such a way that the liquid level of the coffee liquid (4), when the latter is introduced into the container interior via the inflow (12), is able to be increased to a liquid level which is above or at the height of the steps (16) arranged in a terrace-like manner.

12. Coffee machine according to one of the preceding claims,
**characterized in that**
the peripheral container wall (8), with the steps (16) formed therein, and the container bottom (10), with the liquid outflow (14), are formed as an integral component, in particular as an injection-moulded part, which is preferably insertable as an insert into a housing for accommodating the container (6).

13. Coffee machine according to one of the preceding claims,
**characterized in that**
the container (6) is able to be closed off at its top side by a cover (28).

14. Coffee machine according to one of the preceding claims,
**characterized in that**
the surface of at least one of the step faces (16a) and/or of one of the step walls (16b) has a structure with a roughness profile whose arithmetic mean value of the profile ordinates (Ra) is between 1.1 µm and 6.3 µm and whose maximum height (Rz) lies between 4.7 µm and 24.0 µm.

15. Use of an apparatus (1) comprising a container (6) with a container interior, which is delimited by a peripheral container wall (8) and a container bottom (10), with an inflow (12), which is arranged above the container bottom (10) and via which the container interior is fillable with coffee liquid (4), and with a liquid outflow (14), which is arranged at the base of the container bottom (10) and from which the coffee liquid (4) freed of coffee foam (2) is dischargeable from the container interior, wherein the container bottom (10) runs together in a funnel-like manner towards the liquid outflow (14) and has a multiplicity of peripheral steps (16) arranged one above the other in a terrace-like manner and having in each case a peripheral step face (16a) and a standing step wall (16b), arranged at an angle (α) thereto, which adjoin one another at a step edge (16c), for removing coffee foam (2) from coffee liquid.

## Revendications

1. Machine à café (100) pourvu un dispositif (1) pour enlever la mousse de café (2) d'un liquide de café (4), comprenant un récipient (6) pourvu d'un espace intérieur de récipient qui est limité par une paroi de récipient périphérique (8) ainsi que par un fond de récipient (10), comprenant une arrivée (12) disposée au-dessus du fond de récipient (10) et par laquelle l'espace intérieur de récipient peut être rempli avec un liquide de café (4), ainsi que comprenant une évacuation de liquide (14) disposée sur la base du fond de récipient (10) et par laquelle le liquide de café (4) débarrassé de la mousse de café (2) peut être évacué de l'espace intérieur de récipient,
**caractérisée en ce que** le fond de récipient (10) converge en forme d'entonnoir vers l'évacuation de liquide (14) et présente une pluralité de gradins périphériques (16) disposés les uns au-dessus des autres en forme de terrasse et qui disposent respectivement d'une surface de gradin périphérique (16a) et d'une paroi de gradin redressée (16b) disposée selon un angle (α) par rapport à celle-ci, qui sont adjacentes l'une à l'autre au niveau d'un bord de gradin (16c).

2. Machine à café selon la revendication 1, **caractérisée en ce que** la surface de gradin (16a) de chaque gradin (16) est par rapport à un plan (18) s'étendant horizontalement disposée de manière inclinée en direction de l'évacuation de liquide (14) selon un angle (β) de 0° à +10°, de préférence de 2,5° à 7°, et/ou **en ce que** la paroi de gradin redressée (16b) de chaque gradin (16) forme avec la surface de gradin (16a) adjacente à celle-ci un angle compris entre 77,5° et 90°.

3. Machine à café selon la revendication 1 ou 2, **caractérisée en ce que** la position spatiale du récipient (6) par rapport à l'orientation horizontale des gradins périphériques (16) disposés en forme de terrasse peut être variée par des moyens de réglage, en particulier des vis de réglage.

4. Machine à café selon l'une quelconque des revendications précédentes, **caractérisée en ce que** le récipient (6) présente dans une vue de dessus une forme de section transversale substantiellement rectangulaire, et **en ce que** les surfaces de gradin périphériques (16a) présentent dans la zone d'un premier plan imaginaire (19) s'étendant entre les côtés plus courts (6a) du récipient (6) une profondeur de gradin (T₁) qui est supérieure à la profondeur de gradin (T₂) du même gradin dans la zone d'un deuxième plan imaginaire (20) s'étendant perpendiculairement à celle-ci entre les côtés plus longs (6b) du récipient (6).

5. Machine à café selon la revendication 4, **caractérisée en ce que** les surfaces de gradin périphériques (16a) dans la zone du plan imaginaire (19) s'étendant entre les côtés plus courts (6a) de l'espace intérieur de récipient vers l'évacuation de liquide (14) sont inclinées par rapport à l'horizontale (18) d'un angle (β) compris entre 1° et 5°, de préférence de 2,5°, et/ou **en ce que** les surfaces de gradin périphériques (16a) dans la zone du deuxième plan imaginaire (20) s'étendant entre les côtés plus longs (6b) de l'espace intérieur de récipient sont inclinées par rapport à l'horizontale (18) vers l'évacuation de liquide (14) d'un angle (β) compris entre 5° et 10°, de préférence de 7,5°.

6. Machine à café selon la revendication 4 ou 5, **caractérisée en ce que** la paroi de gradin redressée (16b) de chaque gradin (16) forme dans la zone du plan imaginaire (19) s'étendant entre les côtés plus courts (6a) du récipient (6) avec la surface de gradin (16b) adjacente à celle-ci un angle (α) compris entre 70° et 90°, de préférence 77,5°, et/ou **en ce que** la paroi de gradin redressée (16b) de chaque gradin (16) forme dans la zone du plan imaginaire (20) s'étendant entre les côtés plus longs (6b) du récipient avec la surface de gradin (16a) adjacente à celle-ci un angle (α) compris entre 80° et 100°, de préférence 90°.

7. Machine à café selon l'une quelconque des revendications précédentes, **caractérisée en ce que** l'évacuation de liquide (14) présente un canal d'évacuation (14a) qui présente une forme de section transversale allongée, substantiellement rectangulaire ou une forme de section transversale ovale.

8. Machine à café selon l'une quelconque des revendications précédentes, **caractérisée en ce que** d'autres gradins (22) en forme d'escalier sont disposés dans la paroi latérale du canal d'évacuation (14a).

9. Machine à café selon la revendication 8, **caractérisée en ce que** les autres gradins (22) en forme d'escalier sont disposés sur le côté du canal d'évacuation (14a) détourné du fond de récipient (10), et **en ce que** le canal d'évacuation (14a) possède entre la base du fond de récipient (10) et les autres gradins (22) en forme d'escalier une section de canal (24) à paroi lisse, de préférence rectiligne, par laquelle le liquide de café (4) passe du fond de récipient (10) aux autres gradins (22) en forme d'escalier.

10. Machine à café selon la revendication 9, **caractérisée en ce qu'**au-dessous des gradins (22) en forme d'escalier, une ouverture d'évacuation (26) est formée par laquelle le liquide de café (4) est évacué du récipient (6) disposé au-dessus.

11. Machine à café selon la revendication 9, **caractérisée en ce que** l'ouverture d'évacuation (26) est réalisée en particulier en forme de fente et présente une superficie de la section inférieure à celle de l'arrivée (12), et/ou **en ce que** l'évacuation peut être fermée par une vanne de telle sorte que le niveau de liquide du liquide de café (4) lorsqu'il est versé par l'arrivée (12) dans l'espace intérieur de récipient peut être relevé à un niveau de liquide qui est situé au-dessus ou à la hauteur des gradins (16) disposés en forme de terrasse.

12. Machine à café selon l'une quelconque des revendications précédentes, **caractérisée en ce que** la paroi de récipient périphérique (8) avec les gradins (16) formés dans celle-ci et le fond de récipient (10) avec l'évacuation de liquide (14) sont formés comme un composant d'un seul tenant, en particulier comme une pièce moulée par injection qui peut de préférence être insérée comme un insert dans le boîtier pour recevoir le récipient (6).

13. Machine à café selon l'une quelconque des revendications précédentes, **caractérisée en ce que** le récipient (6) peut être fermé sur sa face supérieure par un couvercle (28).

14. Machine à café selon l'une quelconque des revendications précédentes, **caractérisée en ce que** la surface d'au moins l'une des surfaces de gradin (16a) et/ou d'une des surfaces de gradin (16b) présentent une structure ayant un profil de rugosité dont la moyenne arithmétique de l'ordonnée de profil (Ra) est comprise entre 1,1 µm et 6,3 µm, et dont la plus grande hauteur (Rz) est comprise entre 4,7 µm et 24,0 µm.

15. Utilisation d'un dispositif (1) comprenant un récipient (6) pourvu d'un espace intérieur de récipient qui est limité par une paroi de récipient périphérique (8) ainsi que par un fond de récipient (10), comprenant une arrivée (12) disposée au-dessus du fond de récipient (10) et par laquelle l'espace intérieur de récipient peut être rempli avec un liquide de café (4), ainsi que comprenant une évacuation de liquide (14) disposée sur la base du fond de récipient (10) et par laquelle le liquide de café (4) débarrassé de la mousse de café (2) peut être évacué de l'espace intérieur de récipient, dans laquelle le fond de récipient (10) converge en forme d'entonnoir vers l'évacuation de liquide (14) et présente une pluralité de gradins périphériques (16) disposés les uns au-dessus des autres en forme de terrasse et qui disposent respectivement d'une surface de gradin périphérique (16a) et d'une paroi de gradin redressée (16b) disposée selon un angle (α) par rapport à celle-ci, qui sont adjacentes l'une à l'autre au niveau d'un bord de gradin (16c), pour enlever la mousse de café (2) du liquide de café.
